# EUROPÄISCHE PATENTSCHRIFT

(11) **EP 1 102 089 B1**
(45) Veröffentlichungstag und Bekanntmachung des Hinweises auf die Patenterteilung: **01.04.2009**
(21) Anmeldenummer: 00105341.2
(22) Anmeldetag: 16.03.2000
(51) Int. Cl.: G01S 13/10, G01S 7/285, G01S 13/93, G01S 13/18, G01S 7/288

(54) **Verfahren und Vorrichtung zum Bestimmen des Abstands zu einem Objekt mittels eines gepulsten elektromagnetischen Signals**
Method and device for determining the distance to an object using a pulsed electromagnetic signal
Méthode et dispositif pour déterminer la distance à un objet employant un signal électromagnétique à impulsions

(30) Priorität: 20.11.1999 DE 19955638
(43) Veröffentlichungstag der Anmeldung: 23.05.2001
(73) Patentinhaber: Valeo Schalter und Sensoren GmbH, 74321 Bietigheim-Bissingen (DE)
(72) Erfinder: Kiemes, Jochen, 70499 Stuttgart (DE); Lill, Anton, 74348 Lauffen (DE)
(74) Vertreter: Dreiss, Fuhlendorf, Steimle & Becker

(56) Entgegenhaltungen:
- EP-A- 0 875 772
- EP-A- 0 935 143
- DE-A- 3 321 224
- DE-A- 4 127 168
- DE-A- 4 433 776
- DE-A- 19 705 834
- US-A- 4 049 953
- US-A- 5 420 589

## Beschreibung

Die vorliegende Erfindung betrifft ein Verfahren zum Bestimmen des Abstands zu einem Objekt mittels eines gepulsten elektromagnetischen Signals, wobei die Laufzeit des Signals zu dem Objekt und wieder zurück im Rahmen eines vergleichenden Messprinzips durch Vergleich des Empfangssignals mit dem um eine variable Verzögerung verzögerten Sendesignal ermittelt und aus der ermittelten Laufzeit der Abstand zu dem Objekt bestimmt wird, und wobei im Rahmen des vergleichenden Messprinzips das Empfangssignal in einem homodynen Mischer mit dem verzögerten Sendesignal gemischt wird. Die Erfindung betrifft außerdem eine Vorrichtung zum Bestimmen des Abstands zu einem Objekt mittels eines gepulsten elektromagnetischen Signals, wobei die Vorrichtung Mittel zum Ermitteln der Laufzeit des Signals zu dem Objekt und wieder zurück im Rahmen eines vergleichenden Messprinzips durch Vergleich des Empfangssignals mit dem um eine variable Verzögerung verzögerten Sendesignal, Mittel zum Bestimmen des Abstands zu dem Objekt aus der ermittelten Laufzeit und einen homodynen Mischer zum Mischen des Empfangssignals im Rahmen des vergleichenden Messprinzips mit dem verzögerten Sendesignal aufweist.

Derartige Verfahren werden bspw. bei Radar-Einparkhilfen oder bei Radar-Abstandsregelungsvorrichtungen im Kraftfahrzeugbereich eingesetzt. Ein derartiges Verfahren ist bspw. aus der deutschen Patentanmeldung DE 199 19 227 bekannt. Diese Anmeldung entspricht EP 1 048 960, die lediglich einen Stand der Technik unter Artikel 54(3) bildet. Dort wird ein Verfahren zum Bestimmen des Abstands zu einem Objekt mittels eines gepulsten elektromagnetischen Signals offenbart. Die Laufzeit des Signals zu dem Objekt und wieder zurück wird im Rahmen eines vergleichenden Messprinzips, das in der Fachliteratur als Equivalent Time Sampling (ETS) bekannt ist, ermittelt. Dazu wird das Empfangssignal mit dem um eine variable Verzögerung verzögerten Sendesignal verglichen. Durch das vergleichende Messprinzip werden die extrem kurzen Pulslaufzeiten des Signals auf eine wesentlich längere Zeitskala gestreckt. Dazu wird eine langsam variierende Änderung der internen Verzögerung der Sendepulsfolge vorgegeben, wobei sich diese Verzögerung über den zu vermessenden realen Laufzeitbereich schiebt. Aus dem Vergleich der intern verzögerten Pulsfolge des verzögerten Sendesignals mit der empfangen Pulsfolge des Empfangssignals wird die externe Laufzeit und dadurch der Abstand zu dem Objekt bestimmt. Zur Durchführung des Vergleichs der intern verzögerten Sendepulsfolge mit der extern verzögerten Empfangspulsfolge wird das Empfangssignal in einem homodynen Mischer mit dem verzögerten Sendesignal auf eine Frequenzebene gleich Null gemischt. Der homodyne Mischer ist vorzugsweise als ein Hochfrequenz-Mischer ausgebildet.

In dem Pfad des Ausgangssignals des Mischers sind Filterund Verstärkerschaltungen angeordnet, die üblicherweise über Koppelkondensatoren DC-frei miteinander verbunden sind (sog. Hochpasskopplung). Dies ist notwendig, um bspw. Offsetdrifts eliminieren und Störquellen im niederfrequenten Bereich unterdrücken zu können.

Wie in Fig. 3 und Fig. 4 gezeigt, ist das Ausgangssignal bzw. das Spektrum des Ausgangssignals des homodynen Mischers nicht DC-frei. Demgemäß führt die Hochpasskopplung (Fig. 5) zu einer Verzerrung und Verbreiterung der ursprünglichen Signalform im Zeitbereich (Fig. 7). Die Amplitude des hochpassgekoppelten Ausgangssignals ist vermindert und der Signalpuls verbreitert. Das führt zu einem Nachklingen und zu einer verschlechterten Auflösung bei der nachfolgenden Signalverarbeitung. Falls in einem großen Nutzsignal auch kleinere Nutzsignale enthalten sind, steigt dadurch die Gefahr, dass die kleineren Nutzsignale nicht als solche von dem großen Nutzsignal unterschieden werden können. Das kann dazu führen, dass kleinere Objekte in einem zu überwachenden Bereich vor oder hinter einem Kraftfahrzeug unerkannt bleiben, falls das verzerrte Signal eines größeren Objektes mit einem Abstand in einer ähnlichen Größenordnung wie der Abstand des kleineren Objektes das Signal dieses kleineren Objektes überlagert und abschattet.

Die Pulsbreite des Ausgangssignals des Mischers ist u. a. von der Pulsbreite der Hochfrequenzpulse des Sendesignals und von der Sweepgeschwindigkeit, mit der die Verzögerung des Sendesignals variiert wird, abhängig. Die kurzen Hochfrequenzpulse werden mit einem Umsetzungsfaktor, der sich aus dem Verhältnis der Lichtgeschwindigkeit zu der Sweepgeschwindigkeit ergibt, in die gestreckte äquivalente Zeitebene der Pulse des Ausgangssignals des Mischers umgesetzt. Es ist somit möglich, den Umsetzungsfaktor dadurch zu verkleinern, dass die Sweepgeschwindigkeit relativ groß gewählt wird. Dadurch wird die Pulsbreite des Ausgangssignals in der Zeitebene vermindert und das Spektrum der Pulse weiter gespreizt. Das führt dazu, dass der relative Anteil des Signalspektrums, der durch den Hochpass unterdrückt wird, vermindert wird. Die Auswirkung der Hochpasskopplung auf das Ausgangssignal des Mischers, insbesondere die Verzerrung des hochpassgekoppelten Ausgangssignals, kann auf diese Weise zwar etwas vermindert werden, eine weitergehende alternative Verminderung der Verzerrung und Verbreiterung der ursprünglichen Signalform wäre jedoch wünschenswert, da die Wahl einer höheren Sweepgeschwindigkeit den unerwünschten Nachteil der Minderung der Signalamplitude mit sich bringt, weil weniger HF-Einzelpulse zum äquivalenten ZF-Gesamtpuls aufintegriert werden. Zudem führt eine Erhöhung der Sweepgeschwindigkeit zu einer Verschlechterung der Auflösung und des Signal-Rausch-Verhältnisses der Vorrichtung zum Messen des Abstands zu einem Objekt.

Aus dem Stand der Technik sind als Alternative zu den homodynen Systemen auch sogenannte heterodyne Systeme bekannt, die einen Kohärenzoszillator aufweisen, dessen Frequenz mit einem stabilisierten Träger-Oszillator zur Sendefrequenz hochgemischt wird. Im Empfangspfad wird das Empfangssignal nur mit dem stabilisierten Oszillator heruntergemischt, so dass das auszuwertende Empfangssignal auf einer Frequenzebene ungleich Null vorliegt, die der Frequenz des Kohärenzoszillators entspricht. Heterodyne Systeme haben gegenüber homodynen Systemen allerdings den Nachteil, dass sie eines höheren technischen Aufwands im HF-Teil des Systems bedürfen, da ein zusätzlicher Kohärenzoszillator und ein zusätzlicher Mischer benötigt wird.

Es ist deshalb die Aufgabe der vorliegenden Erfindung, die Auswirkung der Hochpasskopplung von Filter- und Verstärkerschaltungen, die dem Mischer nachgeordnet sind, auf das Ausgangssignal des Mischers, insbesondere eine Verzerrung und Verbreiterung des hochpassgekoppelten Ausgangssignals, reduziert bzw. sogar ganz vermieden werden kann, ohne ein heterodynes System einsetzen zu müssen.

Zur Lösung dieser Aufgabe schlägt die Erfindung ausgehend von dem Verfahren der eingangs genannten Art vor, dass das Sendesignal und/oder das verzögerte Sendesignal derart mit einer vorgegebenen Frequenz moduliert werden, dass das Spektrum des Ausgangssignals des Mischers auf eine höhere Frequenzebene ungleich Null angehoben wird.

Die Nutzung eines auf eine höhere Frequenzebene angehobenen Spektrums des Ausgangssignals des Mischers ist insofern vorteilhaft, als dass das Ausgangssignal des Mischers dann nicht mehr von der Hochpasskopplung von Filter- und Verstärkerschaltungen, die dem Mischer nachgeordnet sind, negativ beeinflusst wird. Der relative Anteil des Signalspektrums, der durch den Hochpass unterdrückt wird, wird entscheidend vermindert. Dadurch wird insbesondere eine Verzerrung und Verbreiterung des hochpassgekoppelten Ausgangssignals des Mischers reduziert bzw. sogar ganz vermieden.

Das Spektrum des Ausgangssignals des Mischers wird auf eine höhere Frequenzebene angehoben, die der vorgegenen Frequenz entspricht. Die vorgegebene Frequenz ist vorzugsweise größer als die Frequenz des Sweepsignals und kleiner als die Pulswiederholfrequenz (Pulse Repetition Frequency, PRF) des Sendesignals. Durch das Anheben des Spektrums des Ausgangssignals auf eine höhere Frequenzebene wird das Spektrum des Ausgangssignals aus dem Bereich niederfrequenter Störungen, bspw. aufgrund eines Dopplereffekts (durch HF-Anteile in dem Sendesignal) oder aufgrund langsamer Drifts in Folge von Auflade- oder Entladevorgängen, in einen Frequenzbereich verschoben, der wesentlich weniger Störungen ausgesetzt ist. Dadurch bleiben die niederfrequenten Störungen ohne Auswirkungen auf das Ausgangssignal und die niederfrequenten Störungen müssen nicht mehr aus dem Ausgangssignal herausgefiltert werden, wodurch ein Abhacken der niedrigen Frequenzen des Spektrums des Ausgangssignals verhindert wird.

Es sind verschiedene Verfahren denkbar, wie das Spektrum des Ausgangssignals des Mischers auf eine höhere Frequenzebene ungleich Null angehoben werden kann. Gemäß einer vorteilhaften Weiterbildung der vorliegenden Erfindung wird vorgeschlagen, dass die Zeitdifferenz zwischen den Pulsen des Sendesignals und den Pulsen des verzögerten Sendesignals moduliert wird.

Die Zeitdifferenz zwischen den Pulsen des Sendesignals und den Pulsen des verzögerten Sendesignals kann auf verschiedene Weise moduliert werden. Es ist bspw. denkbar, das Sendesignal und/oder das verzögerte Sendesignal entsprechend zu modulieren. Das Empfangssignal weist dieselbe Frequenz wie das Sendesignal auf und ist gegenüber dem Sendesignal lediglich um die Signallaufzeit zu dem Objekt und wieder zurück verzögert. Eine Modulation des Sendesignals wirkt sich somit auch auf das Empfangssignal aus. Durch die Modulation des Sendesignals und/oder des verzögerten Sendesignals wird das Ausgangssignal des Mischers, in dem das Empfangssignal mit dem verzögerten Sendesignal gemischt wird, derart verändert, dass das Spektrum des Ausgangssignals auf die höhere Frequenzebene ungleich Null angehoben wird.

Gemäß einer bevorzugten Ausführungsform der vorliegenden Erfindung wird vorgeschlagen, dass das Sendesignal mittels eines ersten Verzögerungsglieds, dessen Verzögerung mittels eines Sweepsignals variiert wird, zu dem verzögerten Sendesignal mit der variablen Verzögerung verzögert wird, wobei das Sweepsignal variiert wird. Durch Variation des Sweepsignals kann das verzögerte Sendesignal auf einfache und effektive Weise moduliert werden.

Des weiteren wird vorgeschlagen, dass in dem Sendepfad des Sendesignals ein weiteres Verzögerungsglied angeordnet ist, dessen Verzögerung mittels eines Ansteuersignals variiert wird, indem das Ansteuersignal variiert wird. Durch Variation des Ansteuersignals kann das Sendesignal und damit auch das Empfangssignal auf einfache und effektive Weise moduliert werden.

Dem Sweepsignal und/oder dem Ansteuersignal wird vorteilhafterweise ein Rechtecksignal aufmoduliert. Das führt dazu, dass das Ausgangssignal des Mischers zwischen seinem eigentlichen Wert zu dem aktuellen Zeitpunkt und einem Wert zu einem vorangegangenen Zeitpunkt umgeschaltet wird. Es wird also letztendlich die Steigung des Ausgangssignals betrachtet. Alternativ wird vorgeschlagen, dass dem Sweepsignal und/oder dem Ansteuersignal ein Sinussignal aufmoduliert wird.

Gemäß einer weiteren bevorzugten Ausführungsform der vorliegenden Erfindung wird vorgeschlagen, dass das Sweepsignal und/oder das Ansteuersignal zwischen seinem eigentlichen Wert und einem davon abweichenden Wert umgeschaltet wird. Der von dem eigentlichen Wert abweichende Wert ist vorzugsweise ein negativer Wert. Der abweichende Wert des Sweepsignals und/oder des Ansteuersignals wird vorteilhafterweise derart gewählt, dass das Ausgangssignal des Mischers zu dem entsprechenden Zeitpunkt gleich oder nahezu Null ist. Das Ausgangssignal des Mischers wird somit zwischen seinem eigentlichen Wert und einem Wert gleich oder nahezu Null umgeschaltet. Diese Ausführungsform hat den Vorteil, dass das Ausgangssignal von seinem eigentlichen Wert auf einen definierten, konstanten Wert umgeschaltet wird und dadurch die Hüllkurve des Ausgangssignals des Mischers erhalten bleibt.

Gemäß einer weiteren bevorzugten Ausführungsform der vorliegenden Erfindung wird vorgeschlagen, dass das Sweepsignal und/oder das Ansteuersignal zwischen seinem eigentlichen Wert und einem weiteren Wert umgeschaltet wird, der derart gewählt wird, dass die Pulse des Sendesignals zeitlich nach den Pulsen des verzögerten Sendesignals ausgelöst werden. Wenn die Pulse des Sendesignals zeitlich nach den Pulsen des verzögerten Sendesignals ausgelöst werden, kann davon ausgegangen werden, dass das Ausgangssignal gleich Null sein müsste, da die Detektion eines Objekts bzw. die Abstandsmessung zu dem Objekt nicht möglich ist. Auch auf diese Weise kann somit das Ausgangssignal des Mischers zwischen seinem eigentlichen Wert und einem Wert gleich Null umgeschaltet werden.

Gemäß einer anderen bevorzugten Ausführungsform der vorliegenden Erfindung wird vorgeschlagen, dass das Sweepsignal und/oder das Ansteuersignal mittels eines D/A-Wandlers von einem Mikrocomputer moduliert oder codiert wird und das Ausgangssignal des Mischers von dem Mikrocomputer eingelesen wird. In dem Mikrocomputer wird das Ausgangssignal dann demoduliert, decodiert oder korreliert. Hierdurch können die oben bereits vorgestellten Ausführungsformen der vorliegenden Erfindung realisiert werden. Darüber hinaus können weitere Modulationsarten, wie bspw. eine Pulsweitenmodulation (PWM), eine Frequenzmodulation (FM), bestimmte Codierungsarten oder bestimmte Korrelationstechniken für das erfindungsgemäße Verfahren verwendet werden. Schließlich wird gemäß einer vorteilhaften Weiterbildung der Erfindung vorgeschlagen, dass die vorgegebene Frequenz, mit der das Sendesignal und/oder das verzögerte Sendesignal moduliert wird, ebenfalls moduliert wird.

Es ist zur Verbesserung der Zuverlässigkeit der Detektion von Objekten in einem zu überwachenden Bereich bekannt, bei Verfahren der eingangs genannten Art das Empfangssignal oder das verzögerte Sendesignal in einem Abzweig jeweils um +/-PI/2 (also um 90°) phasenzuverschieben. Im Rahmen des vergleichenden Messprinzips wird dann entweder das Empfangssignal und das phasenverschobene Empfangssignal jeweils in einem homodynen Mischer mit dem verzögerten Sendesignal oder aber das verzögerte Sendesignal und das phasenverschobene, verzögerte Sendesignal jeweils in einem homodynen Mischer mit dem Empfangssignal gemischt. Dieses Prinzip ist in der Literatur als I/Q-Mischung bekannt. Natürlich ist es möglich, die oben beschriebenen Maßnahmen auch bei I/Q-Systemen einzusetzen, um die Spektren der Ausgangssignale beider Mischer auf eine höhere Frequenzebene ungleich Null anzuheben.

Als weitere Lösung der vorliegenden Aufgabe wird ausgehend von der Vorrichtung der eingangs genannten Art eine Vorrichtung vorgeschlagen, die Mittel zum Durchführen des Verfahrens nach einem der Ansprüche 1 bis 11 aufweist.

Im Folgenden werden an Hand der Zeichnungen bevorzugte Ausführungsbeispiele der vorliegenden Erfindung näher erläutert. Es zeigen:

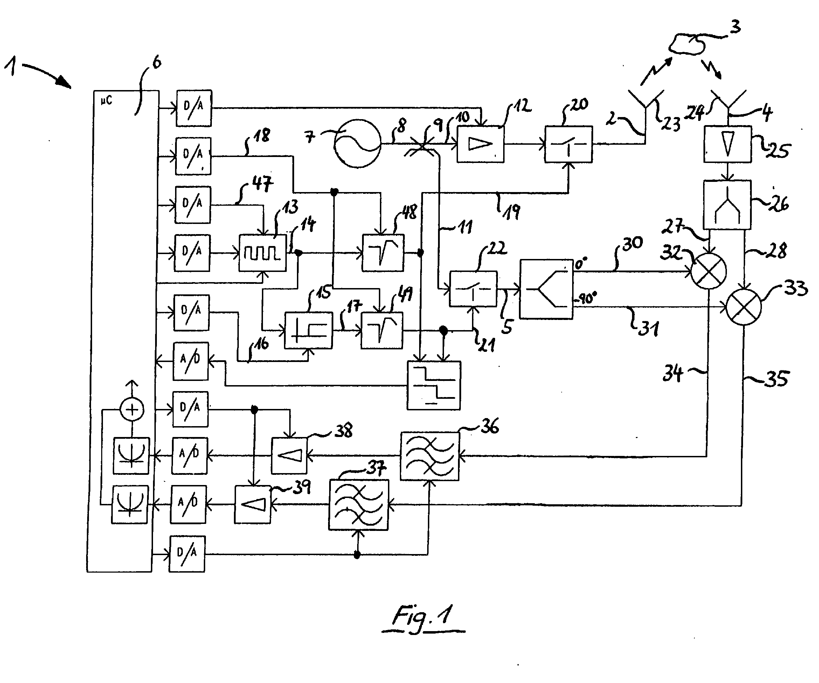

- Fig. 1: eine Vorrichtung zur Durchführung des erfindungsgemäßen Verfahrens gemäß eines ersten bevorzugten Ausführungsbeispiels;

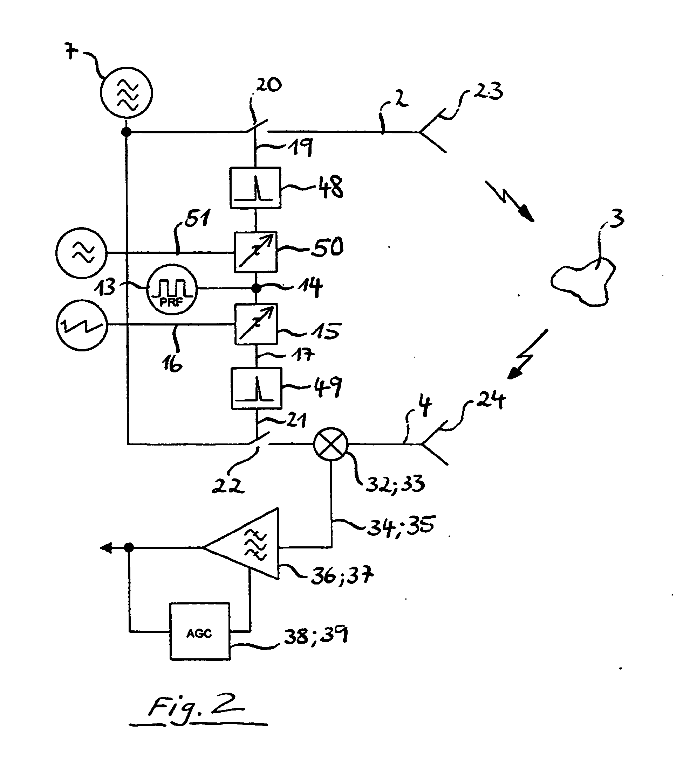

- Fig. 2: eine Vorrichtung im Ausschnitt zur Durchführung des erfindungsgemäßen Verfahrens gemäß eines zweiten bevorzugten Ausführungsbeispiels;

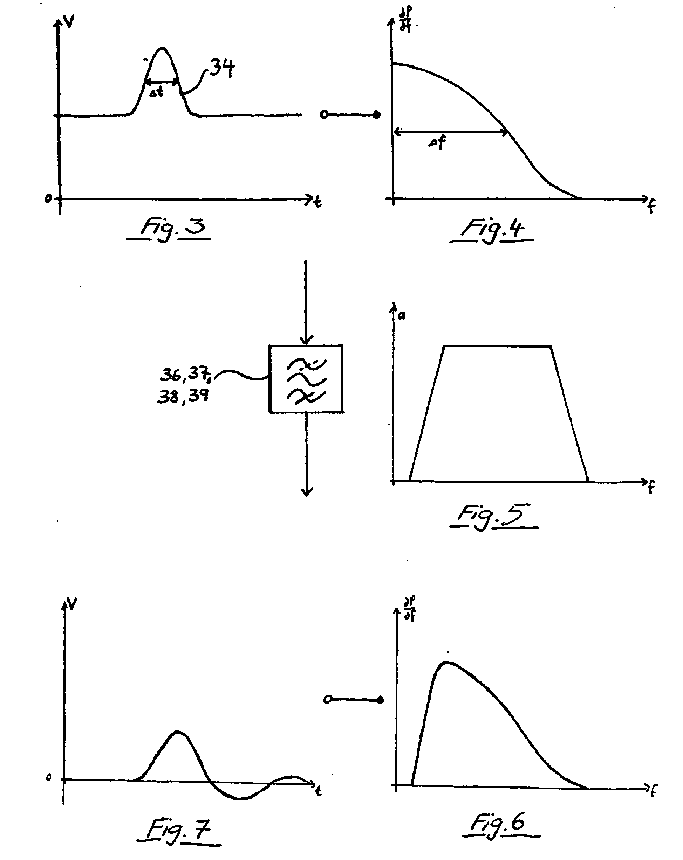

- Fig. 3: einen Signalpuls eines Ausgangssignals eines homodynen Mischers einer aus dem Stand der Technik bekannten Vorrichtung zum Bestimmen des Abstands zu einem Objekt mittels des Equivalent Time Sampling (ETS)-Verfahrens;
- Fig. 4: das Spektrum des Signalpulses aus Fig. 3;
- Fig. 5: das Spektrum eines Hochpassfilters;
- Fig. 6: das hochpassgefilterte Spektrum aus Fig. 4;
- Fig. 7: der Signalpuls aus Fig. 3 nach der Hochpassfilterung;

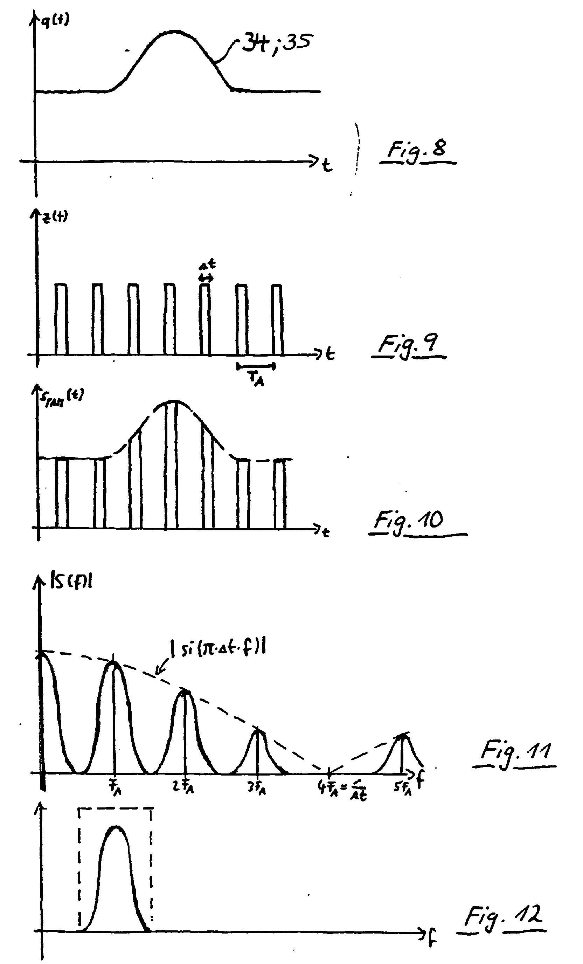

- Fig. 8: einen Signalpuls eines Ausgangssignals des homodynen Mischers der Vorrichtung gemäß Fig. 2;
- Fig. 9: ein Signal zur Modulation der Zeitdifferenz, d. h. des Sweepsignals und/oder des Ansteuersignals der Vorrichtung gemäß Fig. 2;
- Fig. 10: der Signalpuls gemäß Fig. 8 nach einer Modulation durch das Signal gemäß Fig. 9;
- Fig. 11: das Spektrum des modulierten Signalpuls gemäß Fig. 10; und
- Fig. 12: das auf die erste Harmonische gefilterte Spektrum gemäß Fig. 11.

In Fig. 1 ist eine Vorrichtung zum Bestimmen des Abstands zu einem Objekt mittels eines gepulsten elektromagnetischen Signals in ihrer Gesamtheit mit dem Bezugszeichen 1 gekennzeichnet. Vorrichtungen der in Fig. 1 dargestellten Art werden bspw. bei Radar-Einparkhilfen oder bei Radar-Abstandsregelungsvorrichtungen im Kraftfahrzeugbereich eingesetzt. Von der Vorrichtung 1 aus wird ein gepulstes elektromagnetisches Signal 2 in Richtung eines Objekts 3 ausgesandt. Die Laufzeit des Signals 2 zu dem Objekt 3 und wieder zurück wird im Rahmen eines vergleichenden Messprinzips, das in der Fachliteratur als Equivalent Time Sampling (ETS)-Verfahren bekannt ist, gemessen. Durch das vergleichende Messprinzip werden die extrem kurzen Pulslaufzeiten des Signals 2 auf eine wesentlich längere Zeitskala gestreckt. Dazu wird ein langsam variierender Trigger vorgegeben, der sich über den zu vermessenden realen Laufzeitbereich schiebt. Der Trigger wird auch als Sweepsignal bezeichnet. Im Rahmen des vergleichenden Messprinzips wird ein Empfangssignal 4 in einem homodynen Mischer mit einem in der Vorrichtung 1 um eine variable Verzögerung verzögerten Sendesignal 5 bzw. mit dem Trägersignal der Sendesignale 2, 5 gemischt. Aus der ermittelten Laufzeit wird dann der Abstand zu dem Objekt 3 bestimmt.

Im einzelnen umfasst die Vorrichtung 1 einen Mikrocomputer 6, der den Ablauf des erfindungsgemäßen Verfahrens steuert. Der Mikrocomputer 6 ist über eine Vielzahl von D/A- und A/D-Wandler mit den analogen Bauteilen der Vorrichtung 1 verbunden. In einem Oszillator 7 wird das Trägersignal 8 der Sendesignal 2, 5 generiert. In einem Leistungsteiler 9 wird das Trägersignal 8 in ein Trägersignal 10 für das Sendesignal 2 und in ein Trägersignal 11 für das verzögerte Sendesignal 5 aufgesplittet. Das Trägersignal 10 wird in einem Dämpfungsglied 12 mit einer von dem Mikrocomputer 6 vorgegebenen Dämpfung gedämpft.

Der Mikrocomputer 6 steuert einen Pulswiederholgenerator 13 an, der ein Pulstriggersignal 14 ausgibt. Das Pulstriggersignal 14 wird an ein Verzögerungsglied 15 geführt, dessen Verzögerung von dem Mikrocomputer 6 mittels eines Sweepsignals 16 variiert werden kann. Das Pulstriggersignal 14 wie auch das verzögerte Pulstriggersignal 17 werden jeweils einem Pulsformer 48; 49 zugeführt. Die Pulsformer 48, 49 ermöglichen die Wahl einer variablen Pulslänge der Einhüllenden der Amplitudenmodulation des Trägersignals 8. Der Mikrocomputer 6 hat über einen D/A-Wandler Zugriff auf die Pulsformer 48, 49 und kann so die Pulsbreite der Pulse der Sendesignale 2 und der verzögerten Sendesignale 5 wählen.

Das Ausgangssignal 19 des Pulsformers 48 dient zur Ansteuerung eines ersten analogen Modulationsschalters 20, durch den die Pulse des Ausgangssignals 19 auf das Trägersignal 10 aufmoduliert werden und so das Sendesignal 2 gebildet wird. Das Ausgangssignal 21 des Pulsformers 49 dient zur Ansteuerung eines zweiten analogen Modulationsschalters 22, durch den die Pulse des Ausgangssignals 21 auf das Trägersignal 11 aufmoduliert werden und so das verzögerte Sendesignal 5 gebildet wird. Die Schalter 20, 22 sind als schnelle Hochfrequenzschalter ausgebildet. Der Zeitpunkt der Auslösung eines Pulses erfolgt durch die Pulstriggersignale 14, 17, welche die Pulsformer 48, 49 antriggern.

Das Sendesignal 2 wird von der Vorrichtung 1 mittels einer Sendeantenne 23 in Richtung des Objekts 3 ausgesandt, von diesem zumindest teilweise reflektiert und von der Vorrichtung 1 mittels einer Empfangsantenne 24 wieder empfangen. Das Empfangssignal 4 wird in einem Verstärker 25 verstärkt und von einer ersten Signalweiche 26 in zwei identische Signale 27, 28 aufgeteilt. Das verzögerte Sendesignal 5 wird von einer zweiten Signalweiche 29 ebenfalls in zwei Signal 30, 31 aufgeteilt, wobei das Signal 31 um -90° (-PI/2) relativ zu dem Signal 30 phasenverschoben ist. Dieses zweikanalige Verfahren ist in der Literatur unter dem Namen I-/Q-Messung bekannt.

In einem ersten homodynen Hochfrequenz (HF)-Mischer 32 werden die Signale 27 und 30 auf eine Frequenzebene gleich Null und in einem zweiten homodynen Hochfrequenz (HF)-Mischer 33 die Signale 28 und 31 ebenfalls auf eine Frequenzebene gleich Null gemischt. Die Ausgangssignale 34, 35 der HF-Mischer 32, 33 werden über adaptive Signalfilter 36, 37 und variable Verstärker 38, 39 zu dem Mikrocomputer 6 geführt.

Die in dem Pfad der Ausgangssignale 34, 35 der HF-Mischer 32, 33 angeordneten Signalfilter 36, 37 und Verstärker 38, 39 sind üblicherweise über Koppelkondensatoren DC-frei miteinander verbunden (sog. Hochpasskopplung). Dies ist notwendig, um bspw. Offsetdrifts eliminieren und Störquellen im niederfrequenten Bereich unterdrücken zu können.

Die Fig. 3 bis Fig. 7 beziehen sich auf eine aus dem Stand der Technik bekannte Vorrichtung zum Bestimmen des Abstands zu einem Objekt mittels eines gepulsten elektromagnetischen Signals. In Fig. 3 ist der Signalverlauf des Ausgangssignal 34 nach einer homodynen Mischung auf eine Frequenzebene gleich Null dargestellt. Alles was nachfolgend für das Ausgangssignal 34 gesagt wird, gilt ebenso für das Ausgangssignal 35. Fig. 4 zeigt das Spektrum des Ausgangssignals 34 aus Fig. 3. Wie in Fig. 3 und Fig. 4 gezeigt, ist das Ausgangssignal 34 (Fig. 3) des homodynen Mischers 32 bzw. das Spektrum (Fig. 4) des Ausgangssignals 34 nicht DC-frei. Demgemäß führt eine Hochpasskopplung (vgl. Fig. 5) aufgrund der DC-frei miteinander verbunden Signalfilter 36, 37 und Verstärker 38, 39 zu einer Verzerrung und Verbreiterung der ursprünglichen Signalform des Ausgangssignals 34 im Zeitbereich (Fig. 7). In Fig. 7 ist deutlich zu erkennen, dass die Amplitude des hochpassgekoppelten Ausgangssignals 34 vermindert und der Signalpuls verbreitert ist. Das führt zu einem Nachklingen und zu einer verschlechterten Auflösung bei der nachfolgenden Signalverarbeitung in dem Mikrocomputer 6. Falls in einem großen Nutzsignal auch kleinere Nutzsignale enthalten sind, steigt dadurch die Gefahr, dass die kleineren Nutzsignale nicht als solche von dem großen Nutzsignal unterschieden werden können. Das kann bei der aus dem Stand der Technik bekannten Vorrichtung dazu führen, dass kleinere Objekte in einem zu überwachenden Bereich vor oder hinter einem Kraftfahrzeug unerkannt bleiben.

Um die Auswirkung der Hochpasskopplung der Signalfilter 36, 37 und der Verstärker 38, 39, die den HF-Mischern 32, 33 nachgeordnet sind, auf die Ausgangssignale 34, 35 der HF-Mischer 32, 33 zu reduzieren bzw. sogar ganz zu vermeiden, ohne ein heterodynes Hochfrequenz (HF)-System einsetzen zu müssen, schlägt die Erfindung vor, das Sendesignal 2 und/oder das verzögerte Sendesignal 5 mit einer vorgegebenen Frequenz derart zu modulieren, dass die Spektren der Ausgangssignale 34, 35 der Mischer 32, 33 auf eine höhere Frequenzebene ungleich Null angehoben werden. Insbesondere soll mit der vorliegenden Erfindung eine Verzerrung und Verbreiterung der hochpassgekoppelten Ausgangssignale 34, 35 vermieden werden. Vorzugsweise wird die Zeitdifferenz zwischen den Pulsen des Sendesignals 2 und den Pulsen des verzögerten Sendesignals 5 moduliert.

Als erstes Ausführungsbeispiel wird in Fig. 1 vorgeschlagen, das Sweepsignal 16 zu variieren. Zur Variation des Sweepsignals 16 kann diesem bspw. ein Rechtecksignal aufmoduliert werden. Das führt dazu, dass die Ausgangssignale 34, 35 der HF-Mischer 32, 33 zwischen ihrem eigentlichen Wert zu dem aktuellen Zeitpunkt und einem Wert zu einem vorangegangenen Zeitpunkt umgeschaltet werden. Es werden also letztendlich die Steigungen der Ausgangssignale 34, 35 betrachtet. Alternativ kann dem Sweepsignal 16 auch ein Sinussignal oder eine andere Signalform aufmoduliert werden.

Darüber hinaus ist es denkbar, das Sweepsignal 16 zwischen seinem eigentlichen Wert und einem davon abweichenden Wert umzuschalten. Der von dem eigentlichen Wert abweichende Wert des Sweepsignals 16 wird derart gewählt, dass die Ausgangssignale 34, 35 der HF-Mischer 32, 33 zu dem entsprechenden Zeitpunkt gleich oder nahezu Null sind. Die Ausgangssignale 34, 35 der HF-Mischer 32, 33 werden somit zwischen ihrem eigentlichen Wert und einem Wert gleich oder nahezu Null umgeschaltet. Dies hat den Vorteil, dass die Ausgangssignale 34, 35 von ihrem eigentlichen Wert auf einen definierten, konstanten Wert umgeschaltet werden und dadurch die Hüllkurve der Ausgangssignale 34, 35 der HF-Mischer 32, 33 erhalten bleibt (vgl. Fig. 8 und Fig. 10).

Es ist des weiteren denkbar, dass das Sweepsignal 16 zwischen seinem eigentlichen Wert und einem weiteren Wert umgeschaltet wird. Der weitere Wert wird derart gewählt, dass die Pulse des Sendesignals 2 zeitlich nach den Pulsen des verzögerten Sendesignals 5 ausgelöst werden. Wenn die Pulse des Sendesignals 2 zeitlich nach den Pulsen des verzögerten Sendesignals 5 ausgelöst werden, kann davon ausgegangen werden, dass die Ausgangssignale 34, 35 gleich Null sein müssten, da die Detektion eines Objekts 3 bzw. die Abstandsmessung zu dem Objekt 3 nicht möglich ist. Auch auf diese Weise können die Ausgangssignale 34, 35 der HF-Mischer 32, 33 zwischen ihrem eigentlichen Wert und einem Wert gleich Null umgeschaltet werden.

Es ist des weiteren denkbar, dass das Sweepsignal 16 von dem vorgeschalteten D/A-Wandler durch den Mikrocomputer 6 direkt moduliert oder anderweitig codiert wird.

In Fig. 2 ist zur Vereinfachung ein Ausschnitt einer einkanaligen Vorrichtung 1, d. h. kein I/Q-System wie in Fig. 1, mit lediglich einem Ausgangspfad dargestellt. Als zweites Ausführungsbeispiel wird in Fig. 2 vorgeschlagen, dass in dem Sendepfad des Sendesignals 2 ein weiteres Verzögerungsglied 50 angeordnet ist. Genauer gesagt ist das weitere Verzögerungsglied 50 in dem Pfad des Pulstriggersignals 14 angeordnet und verzögert das Ausgangssignal 19 des Pulsformers 48, durch das der Modulationsschalter 20 angesteuert wird, um eine variable Verzögerung. Die Verzögerung des weiteren Verzögerungsglieds 50 wird mittels eines Ansteuersignals 51 variiert. Das Ansteuersignal 51 kann wie oben im Rahmen der Beschreibung der Fig. 1 für das Sweepsignal 16 ausgeführt variiert werden. Die Variation des Ansteuersignals 51 kann zusätzlich zu oder anstatt der Variation des Sweepsignals 16 durchgeführt werden.

Im Prinzip führt die erfindungsgemäße Modulation bei Verwendung eines Rechtecksignals zur Modulation des Sendesignals 2 und/oder des verzögerten Sendesignals 5 eine Pulsamplitudenmodulation (PAM) der Ausgangssignale 34, 35 durch. Die Ausgangssignale 34, 35 bilden dabei die modulierenden Quellsignale (Fig. 8), deren Spektren auf die Zeiger der ersten Harmonischen des Rechtecksignals 46 (Fig. 9) gefaltet werden. Bei dem Rechtecksignal wird zwischen einem aktuellen Wert und einem davon abweichenden Wert umgeschaltet, bei dem das Ausgangssignal 34; 35 des Mischers 32; 33 gleich Null ist. Die Zeiger erhält man als Koeffizienten der Fourierreihe des Rechtecksignals 46. In der nachfolgenden Hochpass- bzw. Bandpassfilterung läßt man vorzugsweise die Nutzsignalspektren um die erste Harmonischen ungedämpft (vgl. Fig. 12). Die Spektren um die Harmonischen höherer Ordnung und bei Null (vgl. Fig. 11) werden dagegen gedämpft (vgl. Fig. 12). Damit wird die Systembandbreite auf das notwendige Minimum der Signalnutzbandbreite des Spektrums an der ersten Harmonischen reduziert und dadurch das Systemrauschen auf ein Minimum begrenzt.

## Patentansprüche

1. Verfahren zum Bestimmen des Abstands zu einem Objekt (3) mittels eines gepulsten elektromagnetischen Signals (2), wobei die Laufzeit des Signals (2) zu dem Objekt (3) und wieder zurück im Rahmen eines vergleichenden Messprinzips durch Vergleich des Empfangssignals (4) mit dem um eine variable Verzögerung verzögerten Sendesignal (5) ermittelt und aus der ermittelten Laufzeit der Abstand zu dem Objekt (3) bestimmt wird, und wobei im Rahmen des vergleichenden Messprinzips das Empfangssignal (4) in einem homodynen Mischer (32; 33) mit dem verzögerten Sendesignal (5) gemischt wird, **dadurch gekennzeichnet, dass** das Sendesignal (2) und/oder das verzögerte Sendesignal (5) derart mit einer vorgegebenen Frequenz moduliert werden, dass das Spektrum des Ausgangssignals (34; 35) des Mischers (32; 33) auf eine höhere Frequenzebene ungleich Null angehoben wird.

2. Verfahren nach Anspruch 1, **dadurch gekennzeichnet, dass** die Zeitdifferenz zwischen den Pulsen des Sendesignals (2) und den Pulsen des verzögerten Sendesignals (5) moduliert wird.

3. Verfahren nach Anspruch 2, **dadurch gekennzeichnet, dass** das Sendesignal (2) mittels eines ersten Verzögerungsglieds (15), dessen Verzögerung mittels eines Sweepsignals (16) variiert wird, zu dem verzögerten Sendesignal (5) mit der variablen Verzögerung verzögert wird, wobei das Sweepsignal (16) variiert wird.

4. Verfahren nach Anspruch 2 oder 3, **dadurch gekennzeichnet, dass** in dem Sendepfad des Sendesignals (2) ein weiteres Verzögerungsglied angeordnet ist, dessen Verzögerung mittels eines Ansteuersignals (51) variiert wird, wobei das Ansteuersignal (51) variiert wird.

5. Verfahren nach Anspruch 3 oder 4, **dadurch gekennzeichnet, dass** dem Sweepsignal (16) und/oder dem Ansteuersignal (51) ein Rechtecksignal aufmoduliert wird.

6. Verfahren nach Anspruch 3 oder 4, **dadurch gekennzeichnet, dass** dem Sweepsignal (16) und/oder dem Ansteuersignal (51) ein Sinussignal aufmoduliert wird.

7. Verfahren nach Anspruch 3 oder 4, **dadurch gekennzeichnet, dass** das Sweepsignal (16) und/oder das Ansteuersignal (51) zwischen seinem eigentlichen Wert und einem davon abweichenden Wert umgeschaltet wird.

8. Verfahren nach Anspruch 7, **dadurch gekennzeichnet, dass** der von dem eigentlichen Wert abweichende Wert des Sweepsignals (16) und/oder des Ansteuersignals (51) derart gewählt wird, dass das Ausgangssignal des Mischers (32; 33) gleich oder nahezu Null ist.

9. Verfahren nach Anspruch 3 oder 4, **dadurch gekennzeichnet, dass** das Sweepsignal (16) und/oder das Ansteuersignal (51) zwischen seinem eigentlichen Wert und einem weiteren Wert umgeschaltet wird, der derart gewählt wird, dass die Pulse des Sendesignals (2) zeitlich nach den Pulsen des verzögerten Sendesignals (5) ausgelöst werden.

10. Verfahren nach Anspruch 3 oder 4, **dadurch gekennzeichnet, dass** das Sweepsignal (16) und/oder das Ansteuersignal (51) mittels eines D/A-Wandlers von einem Mikrocomputer (6) moduliert oder codiert wird und das Ausgangssignal (34; 35) des Mischers (32; 33) von dem Mikrocomputer (6) eingelesen und demoduliert, decodiert oder korreliert wird.

11. Verfahren nach einem der Ansprüche 1 bis 10, **dadurch gekennzeichnet, dass** die vorgegebene Frequenz, mit der das Sendesignal (2) und/oder das verzögerte Sendesignal (5) moduliert werden, moduliert wird.

12. Vorrichtung (1) zum Bestimmen des Abstands zu einem Objekt (3) mittels eines gepulsten elektromagnetischen Signals (2), wobei die Vorrichtung (1) Mittel (6, 25, 26, 36, 37, 38, 39) zum Ermitteln der Laufzeit des Signals (2) zu dem Objekt (3) und wieder zurück im Rahmen eines vergleichenden Messprinzips durch Vergleich des Empfangssignals (4) mit dem um eine variable Verzögerung verzögerten Sendesignal (5), Mittel (6) zum Bestimmen des Abstands zu dem Objekt (3) aus der ermittelten Laufzeit und einen homodynen Mischer (32; 33) zum Mischen des Empfangssignals (4) im Rahmen des vergleichenden Messprinzips mit dem verzögerten Sendesignal (5) aufweist, **dadurch gekennzeichnet, dass** die Vorrichtung (1) Mittel (40, 41, 43; 44, 45) aufweist, um das Sendesignal (2) und/oder das verzögerte Sendesignal (5) derart mit einer vorgegebenen Frequenz zu modulieren, dass das Spektrum des Ausgangssignals (34; 35) des Mischers (32; 33) auf eine höhere Frequenzebene ungleich Null angehoben wird.

## Claims

1. A method for determining the distance to an object (3) by means of a pulsed electromagnetic signal (2), in which the transit time of the signal (2) to the object (3) and back again is ascertained in the context of a comparative measurement principle by comparison of the received signal (4) with the transmitted signal (5), delayed by a variable delay, and the distance to the object (3) is determined from the ascertained transit time, and in the context of the comparative measurement principle the received signal (4) is mixed in a homodyne mixer (32; 33) with the delayed transmitted signal (5), **characterized in that** the transmitted signal (2) and/or the delayed transmitted signal (5) is modulated with a predetermined frequency in such a way that the spectrum of the output signal (34; 35) of the mixer (32; 33) is raised to a higher frequency level other than zero.

2. The method as defined by claim 1, **characterized in that** the time difference between the pulses of the transmitted signal (2) and the pulses of the delayed transmitted signal (5) is modulated.

3. The method as defined by claim 2, **characterized in that** by means of a first delay element (15) whose delay is varied by means of a sweep signal (16), the transmitted signal (2) is delayed to become the delayed transmitted signal (5) with the variable delay, and the sweep signal (16) is varied.

4. The method as defined by claim 2 or 3, **characterized in that** a further delay element is disposed in the transmission path of the transmitted signal (2), and the delay of this delay element is varied by means of a trigger signal (51), and the trigger signal (51) is varied.

5. The method as defined by claim 3 or 4, **characterized in that** a square-wave signal is modulated onto the sweep signal (16) and/or to the trigger signal (51).

6. The method as defined by claim 3 or 4, **characterized in that** a sine-wave signal is modulated onto the sweep signal (16) and/or to the trigger signal (51).

7. The method as defined by claim 3 or 4, **characterized in that** the sweep signal (16) and/or the trigger signal (51) is switched over between its actual value and a value deviating from that.

8. The method as defined by claim 7, **characterized in that** the value of the sweep signal (16) and/or of the trigger signal (51) that deviates from the actual value is selected such that the output signal of the mixer (32; 33) is equal to or nearly zero.

9. The method as defined by claim 3 or 4, **characterized in that** the sweep signal (16) and/or the trigger signal (51) is switched over between its actual value and a further value that is selected such that the pulses of the transmitted signal (2) are tripped later than the pulses of the delayed transmitted signal (5).

10. The method as defined by claim 3 or 4, **characterized in that** the sweep signal (16) and/or the trigger signal (51) is modulated or coded by means of a D/A converter by a microcomputer (6), and the output signal (34; 35) of the mixer (32; 33) is input and demodulated, decoded, or correlated by the microcomputer (6).

11. The method as defined by one of claims 1 through 10,
**characterized in that** the predetermined frequency with which the transmitted signal (2) and/or the delayed transmitted signal (5) is modulated is modulated.

12. A device (1) for determining the distance to an object (3) by means of a pulsed electromagnetic signal (2), the device (1) having means (6, 25, 36, 37, 38, 39) for ascertaining the transit time of the signal (2) to the object (3) and back again in the context of a comparative measurement principle by comparison of the received signal (4) with the transmitted signal (5) delayed by a variable delay, means (6) for determining the distance to the object (3) from the ascertained transit time, and a homodyne mixer (32; 33) for mixing the received signal (4) in the context of the comparative measurement principle with the delayed transmitted signal (5), **characterized in that** the device (1) has means (40, 41, 43; 44, 45) for modulating the transmitted signal (2) and/or the delayed transmitted signal (5) with a predetermined frequency in such a way that the spectrum of the output signal (34; 35) of the mixer (32; 33) is raised to a higher frequency level other than zero.

## Revendications

1. Procédé de détermination de la distance par rapport à un objet (3) au moyen d'un signal électromagnétique pulsé (2), dans lequel le temps de propagation du signal (2) en direction de l'objet (3) et en retour est calculé dans le cadre d'un principe de mesure comparative par comparaison du signal de réception (4) avec le signal d'émission retardé (5) selon un retard variable, et la distance par rapport à l'objet (3) est déterminée à partir du temps de propagation calculé, et dans lequel le signal de réception (4) est mélangé au signal d'émission retardé (5) dans un mélangeur homodyne (32 ; 33) dans le cadre du principe de mesure comparative, **caractérisé en ce que** le signal d'émission (2) et/ou le signal d'émission retardé (5) sont modulés à une fréquence prescrite de telle manière que le spectre du signal de sortie (34 ; 35) du mélangeur (32 ; 33) est porté à un niveau de fréquence plus élevé différent de zéro.

2. Procédé selon la revendication 1, **caractérisé en ce que** la différence temporelle entre les impulsions du signal d'émission (2) et les impulsions du signal d'émission retardé (5) est modulée.

3. Procédé selon la revendication 2, **caractérisé en ce que,** au moyen d'un premier élément de retard (15) dont on fait varier le retard à l'aide d'un signal de balayage (16), le signal d'émission (2) est retardé par le retard variable par rapport au signal d'émission retardé (5), moyennant quoi le signal de balayage (16) varie.

4. Procédé selon la revendication 2 ou 3, **caractérisé en ce que** sur le trajet d'émission du signal d'émission (2) est disposé un autre élément de retard dont on fait varier le retard au moyen d'un signal d'activation (51), moyennant quoi le signal d'activation (51) varie.

5. Procédé selon la revendication 3 ou 4, **caractérisé en ce qu'**un signal carré est modulé sur le signal de balayage (16) et/ou le signal d'activation (51).

6. Procédé selon la revendication 3 ou 4, **caractérisé en ce qu'**un signal sinusoïdal est modulé sur le signal de balayage (16) et/ou le signal d'activation (51).

7. Procédé selon la revendication 3 ou 4, **caractérisé en ce que** le signal de balayage (16) et/ou le signal d'activation (51) est commuté entre sa valeur propre et une valeur divergeant de cette dernière.

8. Procédé selon la revendication 7, **caractérisé en ce que** la valeur divergeant de la valeur propre du signal de balayage (16) et/ou du signal d'activation (51) est choisie de telle manière que le signal de sortie du mélangeur (32 ; 33) est égal ou quasiment égal à zéro.

9. Procédé selon la revendication 3 ou 4, **caractérisé en ce que** le signal de balayage (16) et/ou le signal d'activation (51) est commuté entre sa valeur propre et une autre valeur, qui est choisie de telle manière que l'impulsion du signal d'émission (2) est déclenchée dans le temps après les impulsions du signal d'émission retardé (5).

10. Procédé selon la revendication 3 ou 4, **caractérisé en ce que** le signal de balayage (16) et/ou le signal d'activation (51) est modulé ou codé par un microordinateur (6) au moyen d'un convertisseur numérique-analogique, et le signal de sortie (34 ; 35) du mélangeur (32 ; 33) est lu et démodulé, décodé ou corrélé par le microordinateur (6).

11. Procédé selon une des revendications 1 à 10, **caractérisé en ce que** la fréquence prescrite à laquelle est modulé le signal d'émission (2) et/ou le signal d'émission retardé (5), est modulée.

12. Dispositif (1) pour la détermination de la distance par rapport à un objet (3) au moyen d'un signal électromagnétique pulsé (2), dans lequel le dispositif (1) présente des moyens (6, 25, 26, 36, 37, 38, 39) pour calculer le temps de propagation du signal (2) en direction de l'objet (3) et en retour dans le cadre d'un principe de mesure comparative par comparaison du signal de réception (4) avec le signal d'émission retardé (5) d'un retard variable, des moyens (6) pour déterminer la distance par rapport à l'objet (3) à partir du temps de propagation calculé, et un mélangeur homodyne (32 ; 33) pour mélanger le signal de réception (4) au signal d'émission retardé (5) dans le cadre du principe de mesure comparative, **caractérisé en ce que** le dispositif (1) présente des moyens (40, 41, 43 ; 44, 45) pour moduler le signal d'émission (2) et/ou le signal d'émission retardé (5) sont modulés à une fréquence prescrite de telle manière que le spectre du signal de sortie (34 ; 35) du mélangeur (32 ; 33) est porté à un niveau de fréquence plus élevé différent de zéro.
